# EUROPÄISCHE PATENTANMELDUNG

(11) **EP 1 037 026 A2**
(43) Veröffentlichungstag der Anmeldung: **20.09.2000**
(21) Anmeldenummer: 00103944.5
(22) Anmeldetag: 25.02.2000
(51) Int. Cl.: G01J 5/08

(54) **Passiv-Infrarot Sensor**

(30) Priorität: 08.03.1999 DE 19910121
(71) Anmelder: ABB PATENT GmbH, 68309 Mannheim (DE)
(72) Erfinder: Lang, Jens-Olaf, Dipl.-Ing., 01462 Cossebaude (DE); Zimmerhackl, Manfred,Dr.-Ing. habil., 01705 Pesterwitz (DE); Norkus, Volkmar, Dr.-Ing., 01705 Pesterwitz (DE); Hofmann, Günter, Dr.-Ing. habil., 01705 Pesterwitz (DE); Rosch, Rainer, Dr.-Ing., 58513 Schalksmühle (DE); Zapp, Robert, Dipl.-Ing., 58579 Schalksmühle (DE)
(74) Vertreter: Miller, Toivo

(57) **Zusammenfassung**

Die Erfindung bezieht sich auf einen Passiv-Infrarot-Sensor zur Detektion von Personen. Um Unabhängigkeit des Sensor-Ausgangssignals von der Bewegungsrichtung einer Person zu erreichen, wird die Verwendung wenigstens einer kompensierten Sensor-Elementgruppe (20) vorgeschlagen, die ein erstes kreisförmiges Sensorelement (10) und ein zweites flächengleiches Sensorelement (10 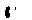 ) aufweist, das kreisringförmig und konzentrisch zum ersten Sensorelement (10) dieses umgebend angeordnet ist.

Zur Erhöhung der Empfindlichkeit können mehrere Elementgruppen (20) in einer Sensormatrix (3) angeordnet und jeweils elektrisch mit einer Signalverarbeitung (4) verbunden werden.

## Beschreibung

Die Erfindung bezieht sich auf einen Passiv-Infrarot-Sensor zur Detektion von Personen, insbesondere zur Erkennung auch kleiner Bewegungen von Personen. Solche Sensoren sind in Bewegungsmeldern einsetzbar.

Infrarotsensoren und deren Arbeitsweise sind beispielsweise in dem Fachbuch 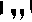 Passiv-Infrarotbewegungsmelder" Verlag moderne Industrie Landsberg/Lech, (Die Bibliothek der Technik, Band 131), Seiten 8 bis 17, beschrieben.

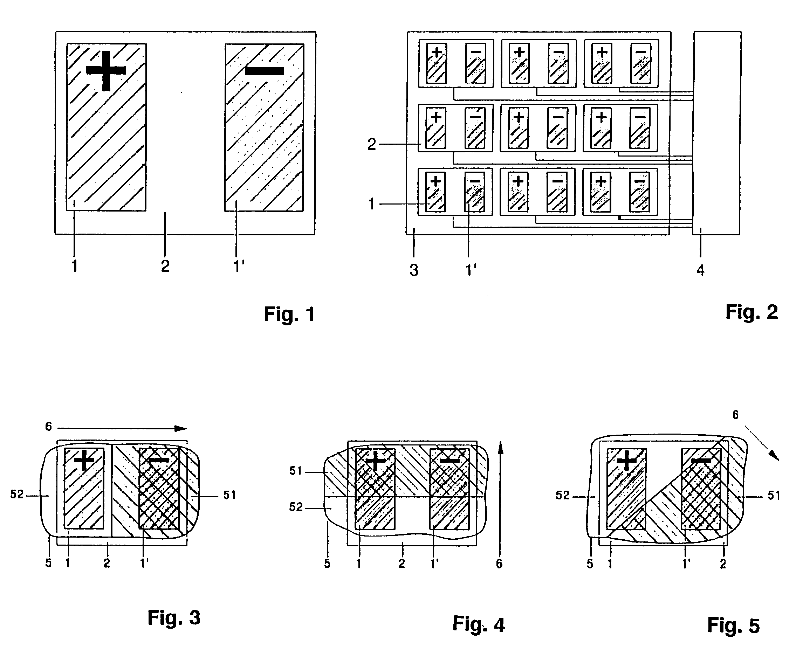

Aus dem Stand der Technik sind sowohl Sensoren mit einzelnen Elementgruppen als auch Matrixanordnungen mit mehreren Elementgruppen bekannt. Bei bekannten Anordnungen ist eine starke Abhängigkeit der Empfindlichkeit von der Bewegungsrichtung einer Person vorhanden. Diese Gegebenheit wird nachstehend anhand der Fig. 1 bis 5 näher erläutert.

In Passiv-Infrarot-Bewegungsmeldern werden spezielle Infrarot-Sensoren verwendet, die in den meisten Fällen zwei empfindliche Sensorelemente enthalten. Beide Sensorelemente sind direkt zusammengeschaltet und bilden eine kompensierte Elementgruppe mit einem Signalausgang. Die Kompensation ergibt sich aus der Differenzbildung der Ausgangssignale der beiden einzelnen empfindlichen Sensorelemente. Fällt auf beide Sensorelemente Strahlung gleicher Intensität, ist das resultierende Ausgangssignal der Elementgruppe gleich Null. Unterschiedliche Strahlungsintensitäten auf beiden empfindlichen Sensorelementen führen dagegen zu einem Ausgangssignal der Elementgruppe, das der Differenz der Ausgangssignale der einzelnen empfindlichen Sensorelemente entspricht.

In Fig. 1 ist eine typische Anordnung zweier empfindlicher Sensorelemente 1, 1' in einer kompensierten Elementgruppe 2 dargestellt. Die beiden rechteckförmigen empfindlichen Sensorelemente 1, 1' können pyroelektrische Elemente sein. Mit Hilfe einer speziellen Optik, z.B. einer Multifresnellinsenoptik, wird die Infrarot-Strahlung aus bestimmten Sektoren des zu überwachenden Raumes auf die beiden empfindlichen Sensorelemente 1, 1' abgebildet. Geht die Strahlung von einem homogenen Hintergrund aus, empfangen beide Sensorelemente 1, 1' Strahlung gleicher Intensität und liefern somit das gleiche Ausgangssignal. Das Ausgangssignal der Elementgruppe 2 ist damit Null, da es sich aus der Differenz der Ausgangssignale der beiden einzelnen empfindlichen Sensorelemente 1,1' zusammensetzt. Auch bei einer Änderung der Temperatur des homogenen Hintergrundes bleibt das Ausgangssignal der Elementgruppe 2 gleich Null, da sich die Änderung der Intensität der abgegebenen Infrarot-Strahlung immer gleichermaßen auf beide empfindlichen Sensorelemente 1,1' auswirkt. Bewegt sich andererseits eine Person im überwachten Raum derart, daß auf beide empfindliche Sensorelemente 1,1 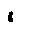 Strahlung unterschiedlicher Intensität gelangt, entsteht am Ausgang der Elementgruppe ein entsprechendes Ausgangssignal.

Zur Erhöhung der räumlichen Auflösung des Passiv-Infrarot-Bewegungsmelders, das heißt zur Detektion auch kleinerer Bewegungen der zu erfassenden Person ist es naheliegend, mehrere Elementgruppen 2 mit den empfindlichen Sensorelementen 1,1' matrixartig anzuordnen. Fig. 2 zeigt einen möglichen Aufbau. Die Elementgruppen 2 wurden in einer Sensormatrix 3 angeordnet, wobei die Ausgangssignale jeder Elementgruppe 2 einer Signalverarbeitung 4 zugeführt werden. Die Verknüpfung der einzelnen Ausgangssignale der Elementgruppen 2 in der Signalverarbeitung 4 liefert dann ebenfalls ein zum erfaßten Strahlungsintensitätsunterschied proportionales Ausgangssignal.

Die Anordnungen nach Fig. 1 und Fig. 2 haben den Nachteil einer erheblichen Abhängigkeit der Empfindlichkeit von der Richtung der auftretenden Strahlungsintensitätsunterschiede. Die Figuren 3, 4 und 5 verdeutlichen diese Zusammenhänge. Infrarot-Strahlung 5 unterschiedlicher Intensität 51, 52 trifft auf die empfindlichen Sensorelemente 1, 1' einer Elementgruppe 2. Je nach Ausrichtung 6 des Intensitätsunterschiedes entstehen unterschiedliche Ausgangssignale am Ausgang der Elementgruppe 2 bzw. der Signalverarbeitung 4. In der Anordnung nach Fig. 3 fällt auf die gesamte Fläche des empfindlichen Sensorelements 1' Strahlung mit der Intensität 51, während das andere empfindliche Sensorelement 1 Strahlung der Intensität 52 empfängt. Es entsteht ein auf den Strahlungsintensitätsunterschied bezogenes maximales Ausgangssignal der Elementgruppe 2 bzw. der Signalverarbeitung 4. Ganz anders sind die Verhältnisse in Fig. 4. Auch hier trifft Strahlung 5 mit unterschiedlicher Intensität 51, 52 auf, aber die betreffenden Flächenanteile beider empfindlicher Sensorelemente 1, 1' sind gleich groß. Damit ist das Ausgangssignal der Elementgruppe 2 bzw. der Signalverarbeitung 4 Null. Ein gegenüber dem Maximalsignal von Fig. 3 entsprechend reduziertes Ausgangssignal der Elementgruppe 2 bzw. der Signalverarbeitung 4 tritt bei Anordnungen nach Fig. 5 auf. Insgesamt ist also eine erhebliche Abhängigkeit der Detektionsempfindlichkeit von der Richtung der auftretenden Intensitätsunterschiede und damit von der Bewegungsrichtung der zu erfassenden Person festzustellen.

Der Erfindung liegt daher die Aufgabe zugrunde, eine Anordnung für kompensierte Elementgruppen für einen Passiv-Infrarot-Sensor mit reduzierter Richtungsabhängigkeit seiner Empfindlichkeit zur Detektion kleiner Bewegungen von Personen anzugeben.

Diese Aufgabe wird durch einen Passiv-Infrarot-Sensor mit den im Anspruch 1 angegebenen Merkmalen gelöst.

Der Sensor enthält wenigstens eine kompensierte Elementgruppe, die aus einem ersten kreisförmigen empfindlichen Sensorelement mit einem zweiten flächengleichen empfindlichen Element, das in Form eines Kreisringes konzentrisch zum ersten Element angeordnet ist. Die empfindlichen Sensorelemente können pyroelektrische Elemente sein, andere strahlungsempfindliche Elemente sind jedoch ebenfalls möglich.

Eine weitere Beschreibung des erfindungsgemäßen Sensors erfolgt nachstehend anhand eines in Zeichnungsfiguren dargestellten Ausführungsbeispiels, wobei die Fig. 1 bis 5 den oben erläuterten Stand der Technik wiedergeben.

Es zeigen:
- Fig. 1: eine kompensierte Elementgruppe,
- Fig. 2: eine Matrixanordnung mit mehreren Elementgruppen, die mit einer Signalverarbeitung verbunden sind,
- Fig. 3 bis 5: Darstellungen zur Erläuterung der Richtungsabhängigkeit bekannter Anordnungen,
- Fig. 6: eine erfindungsgemäße Elementgruppe,
- Fig. 7 und 8: Darstellungen zur Erläuterung der Richtungsunabhängigkeit.

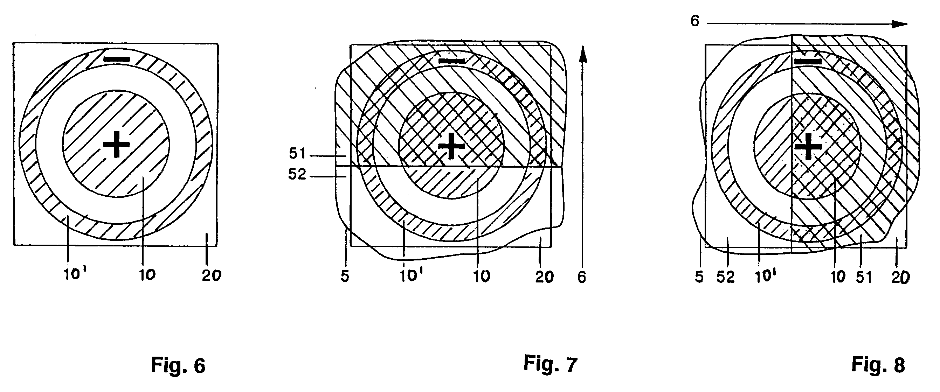

Fig. 6 zeigt eine erfindungsgemäße Anordnung, bei der zur Detektion der Infrarot-Strahlung der pyroelektrische Effekt genutzt ist. Das kreisförmige erste empfindliche Sensorelement 10 ist von einem zweiten flächengleichen kreisringtörmigen empfindlichen Sensorelement 10 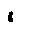 umgeben, die gemeinsam eine Elementgruppe 20 bilden. Mehrere solcher Elementgruppen 20 können zur Erhöhung der Sensor-Empfindlichkeit in einer Sensormatrix angeordnet werden, wie in Fig. 2 ― allerdings mit anderen Elementgruppen - dargestellt ist. Alle Elementgruppen 20 (Fig. 6) einer solchen Matrix 3 (Fig. 2) sind mit der Signalverarbeitung 4 (Fig. 2) elektrisch verbunden.

Die Fig. 7 und 8 zeigen unterschiedliche Ausrichtungen 6 des Intensitätsunterschiedes 51, 52 bei auf die Elementgruppe 20 auftreffender Infrarotstrahlung 5. Es ist ersichtlich, daß unabhängig von der Ausrichtung 6 jeweils gleiche Flächenanteile der Sensorelemente 10 und 10 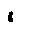 Strahlung 5 mit der gleichen Intensität 51 bzw. 52 empfangen. Das Ausgangssignal einer Elementgruppe 20 und somit auch das Ausgangssignal einer Signalverarbeitung 4 einer Sensormatrix 3 mit erfindungsgemäßen Elementgruppen 20 sind daher unabhängig von der Bewegungsrichtung einer detektierten Person.

Es versteht sich, daß neben den bisher beschriebenen kreis- bzw. kreisringförmigen Sensorelementen auch kreis- bzw. kreisringähnliche Sensorelemente, z. B. als entsprechende Vielecke ausgebildete Sensorelemente, verwendet werden können.

## Patentansprüche

1. Passiv-Infrarot-Sensor zur Verwendung in einem Bewegungsmelder, wobei wenigstens eine kompensierte Sensor-Elementgruppe (20) vorhanden ist, die ein erstes kreisrundes oder vieleckiges Sensorelement (10) und ein zweites flächengleiches Sensorelement (10 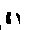 ) aufweist, das ringförmig, bezüglich seiner Form an das erste Sensorelement (10) angepaßt und konzentrisch zum ersten Sensorelement (10) dieses umgebend angeordnet ist.

2. Passiv-Infrarot-Sensor nach Anspruch 1, dadurch gekennzeichnet, daß mehrere Elementgruppen (20) in einer Sensormatrix (3) angeordnet und jeweils elektrisch mit einer Signalverarbeitung (4) verbunden sind.

3. Passiv-Infrarot-Sensor nach Anspruch 1 oder 2, dadurch gekennzeichnet, daß die Sensorelemente (10, 10 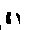 ) pyroelektrische Elemente sind.
